(19) Europäisches Patentamt

European Patent Office

Office européen des brevets

(11) EP 0 651 487 B1

(12) EUROPEAN PATENT SPECIFICATION

(45) Date of publication and mention
of the grant of the patent:
**03.09.1997 Bulletin 1997/36**

(51) Int Cl.6: **H02G 7/16**

(21) Application number: **94117025.0**

(22) Date of filing: **27.10.1994**

(54) **Snow-melting member for power transmission line**

Vorrichtung zum Schmelzen von Schnee für eine Transmissionsleitung

Elément pour faire fondre la neige d'une ligne de transmission d'énergie

(84) Designated Contracting States:
FR GB

(30) Priority: 28.10.1993 JP 270937/93
03.12.1993 JP 303594/93

(43) Date of publication of application:
**03.05.1995 Bulletin 1995/18**

(73) Proprietors:
• **DAIDO TOKUSHUKO KABUSHIKI KAISHA
Naka-ku Nagoya-shi Aichi-ken (JP)**
• **SUMITOMO ELECTRIC INDUSTRIES, LIMITED
Osaka 541 (JP)**

(72) Inventors:
• **Saito, Takanobu
Aichi-ken (JP)**
• **Yahagi, Shinichiro
Obu-shi, Aichi-ken (JP)**
• **Nishikawa, Taichiro, c/o Osaka Works Sumitomo
Konohana-ku, Osaka (JP)**
• **Miyasaki, Kenji, c/o Osaka Works Sumitomo
Konohana-ku, Osaka (JP)**
• **Fujii, Kazuyuki, c/o Osaka Works Sumitomo
Konohana-ku, Osaka (JP)**

• **Kuze, Takayuki, c/o Osaka Works Sumitomo
Konohana-ku, Osaka (JP)**

(74) Representative: **Vetter, Hans, Dipl.-Phys. Dr.
Patentanwälte Dipl.-Ing. Rudolf Magenbauer
Dipl.-Phys. Dr. Otto Reimold
Dipl.-Phys. Dr. Hans Vetter,
Dipl.-Ing. Martin Abel,
Hölderlinweg 58
73728 Esslingen (DE)**

(56) References cited:
• **PATENT ABSTRACTS OF JAPAN vol. 15, no. 330
(E-1103) 22 August 1991 & JP-A-03 124 211
(HITACHI METALS LTD) 27 May 1991**
• **PATENT ABSTRACTS OF JAPAN vol. 14, no. 471
(E-0990) 15 October 1990 & JP-A-02 193 517
(HITACHI METALS LTD) 31 July 1990**
• **PATENT ABSTRACTS OF JAPAN vol. 14, no. 471
(E-0990) 15 October 1990 & JP-A-02 193 516
(HITACHI METALS LTD) 31 July 1990**
• **PATENT ABSTRACTS OF JAPAN vol. 13, no. 192
(E-753) 9 May 1989 & JP-A-01 012 809
(FURUKAWA ELECTRIC CO) 17 January 1989**
• **PATENT ABSTRACTS OF JAPAN vol. 15, no. 187
(E-1067) 14 May 1991 & JP-A-03 049 110
(FURUKAWA ELECTRIC CO) 1 March 1991**

**Description**

FIELD OF THE INVENTION

This invention relates to a snow-melting member that prevents snow from sticking or piling up on an overhead power-transmission line by melting the snow as it falls down on the overhead power-transmission line.

The invention further relates to a snow-melting member for use on a power-transmission line that positively prevents snow from sticking or piling up on the power-transmission line.

BACKGROUND OF THE INVENTION

Falling snow sticking to overhead power-transmission lines is a problem, especially in snowy regions. When snow collects on power-transmission lines, it adds weight to the lines. Further, when the snow falls off a power-transmission line, the load on the power-transmission line abruptly changes. Consequently, the power-transmission line may snap, an associated iron tower may collapse, or houses, green houses or other structures under the power-transmission line may be damaged. To prevent snow from sticking to a power-transmission line, an annular or linear magnetic body, for example, is attached around the outer periphery of the power-transmission line in a known method. The change in magnetic flux in the magnetic body resulting from the alternating current passing through the power-transmission line, causes core loss in the magnetic body. Heat generated by the core loss melts the snow falling on the power-transmission line and thereby prevents snow from sticking to the power-transmission line.

However, in the winter season, only about 10% or less of the allowable current is transmitted by some power-transmission lines. Consequently, the magnetic field applied to the magnetic body attached around the outer periphery of the power-transmission line is decreased to about 10 Oe or less. The generated heat is also decreased in proportion to the resulting decrease in core loss. Therefore, the aforementioned conventional preventive measures can not sufficiently melt the snow. Snow can be sufficiently prevented from sticking to the power-transmission line by this measure only in regions having little snowfall. The conventional preventive measures are thus limited in their effective geographical application and use.

Further snow melting members for a power-transmission line are known from patent abstracts of Japan, vols. 14 and 15:

D1 = PATENT ABSTRACTS OF JAPAN, vol. 15, no. 330 (E-1103) 22/08/91 & JP-a-03 124 211 (Hitachi Metals Ltd.) ; 27/05/91

D2 = PATENT ABSTRACTS OF JAPAN, vol. 14, no. 471 (E-0990) 15/10/90 & JP-A-02 193 517 (Hitachi Metals Ltd.), 31/07/90

D3 = PATENT ABSTRACTS OF JAPAN, vol. 14, no. 471 (E-0990) 15/10/90 & JP-A-02 193 516 (Hitachi Metals (Ltd.), 31/07/90

The heat generation of the magnetic body is in proportion to the core loss Pc, which is the sum of the hysteresis loss- Ph and the eddy current loss Pe (Pc = Ph + Pe). According to each of said known snow melting members by focussing on the hysteresis loss in the core loss a heat generation effect is achieved due to the high hysteresis loss property. However in the core loss Pc the eddy current loss Pe is larger than the hysteresis loss Ph. Therefore the heat generation effect according to these prior art is not sufficient and effective.

Further, in the patent abstracts of Japan, vol. 13, no. 192

D4 = PATENT ABSTRACTS OF JAPAN, vol. 13, no. 192 (E-0753) 09/05/89 & JP-A-01 012 809 (Furukawa Electric Co.), 17/01/89

a snow melting member for surrounding the outer periphery of a power-transmission line is described having one of an annular, tubular and helical configuration and being composed of at least one of metals and metal oxides, whereby the snow melting member has one of an annular and a tubular configuration and is provided in its circumferential direction with at least one joint for attaching said member to a said power-transmission line. However the electromagnetic properties, configuration and the dimensions of the magnetic body in order for obtaining a high eddy current loss are not defined.

SUMMARY OF THE INVENTION

Wherefore, an object of this invention is to provide an effective snow-melting member having a simple structure for use on a power-transmission line.

Another object of the invention is to provide a snow-melting member, for use on a power-transmission line, with which the necessary heat for melting snow is generated by the core loss, even with a relatively low magnetic field, thereby effectively preventing snow from sticking to the power-transmission line.

To solve these objects, the invention provides a snow-melting member, for use on a power-transmission line according to the features of claim 1 and a method of melting snow off of an electric power transmission line according to the features of claim 8 and an electric power transmission line according to the features of claim 14.

In the invention, the metals composing the snow-melting member are preferably selected from the group consisting of an iron-based alloy, a cobalt-based alloy and a nickel-based alloy.

When the snow-melting member is helical, the helical angle is preferably between 3 degrees and 30 degrees.

As is known, when subjected to an alternating field, the core loss Pc is the sum of the hysteresis loss Ph and the eddy current loss Pe (Pc=Ph+Pe). In the core loss Pc, the eddy current loss Pe is larger than the hysteresis loss Ph. The eddy current loss Pe largely varies in a known manner with the electromagnetic characteristics, configuration and dimensions of the magnetic body. Consequently, the invention solves the problem by specifying the range of the electromagnetic characteristics, configuration and dimensions of the magnetic body such that sufficient core loss is obtained for generating the heat required for melting snow, even when the applied magnetic field is relatively weak.

The invention also provides a snow-melting member composed of Fe-Al system alloy to be attached around a power-transmission line. The alloy includes 1 to 15% by weight of aluminum and the remaining percentage by weight of iron and unavoidable impurities.

The snow-melting member can be an alloy wire to be wound around a power-transmission line in a helical form or an alloy ring attached around the power-transmission line.

When a magnetic body formed of Fe-Al system alloy is disposed on a power transmission line in which an alternating current flows, core loss arises in the magnetic body. The heat generated by the core loss melts the snow sticking to the power-transmission line. The core loss of the magnetic body is generally the sum of the magnetic hysteresis loss and the eddy current loss.

In the invention, the snow-melting alloy includes 1 to 15% by weight of aluminum. When the alloy contains less than 1% by weight of aluminum, the exothermic effectiveness is decreased, and the amount of heat required for melting snow cannot be obtained. On the other hand, when the alloy contains more than 15% by weight of aluminum, the amount of heat generated is decreased and the alloy is difficult to process.

BRIEF DESCRIPTION OF THE DRAWINGS

The invention will now be described, by way of example, with reference to the drawings, in which:

Fig. 1 is a perspective view of an annular snow-melting member attached around a power-transmission line embodying the invention;
Fig. 2A is a perspective view of a helical snow-melting member attached around a power-transmission line of another embodiment;
Fig. 2B is an enlarged traverse cross-sectional view of the wire material composing the helical snow-melting member of Fig. 2A;
Fig. 3 is a graph resulting from evaluation test 3, in which the value in formula(2) $t_0(B_H/\rho \cdot H)^{1/2}$ and the core loss are plotted with a logarithmic scale used to plot formula (2) on the horizontal coordinate;
Fig. 4 is a front view of an annular snow-melting member for use on a power-transmission line of another embodiment, the snow-melting member being composed of two divisible members; and
Fig. 5 is a front view of a configuration for testing the electromagnetic properties of the snow-melting members.

DETAILED DESCRIPTION OF THE PREFERRED EMBODIMENTS

The structural elements of the snow-melting member for use on power-transmission lines embodying the invention (referred to as the snow-melting member hereinafter) are now explained.

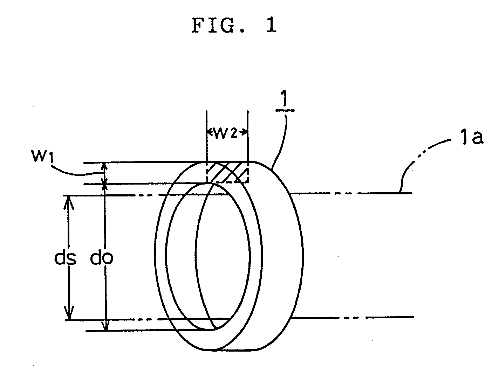

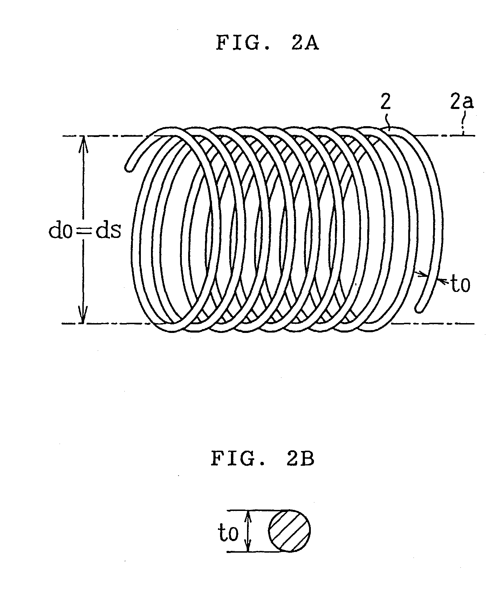

As shown in Fig. 1, the snow-melting member can be annular. Alternatively, the snow-melting member can be tubular or helical as shown in Fig. 2A. In use, the snow-melting member is secured to the outer periphery of a power-transmission line with a fastening member provided on the snow-melting member. Alternatively, the snow-melting member is itself attached around the outer periphery of the power-transmission line.

The snow-melting member is composed of known metals or known metal oxides. However, the composition of the material forming the snow-melting member is not limited to the disclosed materials. Considering the conditions defined in formulas (1) and (2) of the independent claims, however, Fe-6Al, Fe-13Cr or other iron-based alloy; 49Co-2V-Fe, 50Co-Fe or other cobalt-based alloys; or 46Ni-4Mo-Fe, 45Ni-3Cu-Fe or other nickel-based alloys are preferable.

The snow-melting member according to the invention meets the electromagnetic properties defined in the formula(1), while also meeting the dimensions and electromagnetic properties defined in the formula(2). If the conditions defined in these formulas are not satisfied, an insufficient core loss is obtained and the snow cannot be sufficiently melted. However, the snow melting properties of the snow-melting member are not substantially impaired if the characteristics of the member only slightly deviate from the characteristics defined in formulas (1) and (2).

The elements described in the formulas (1) and (2) defining the snow-melting member will now be explained.

As aforementioned, H[Oe] (1 Oe $\simeq$ 79.58 A/m) represents the intensity of the magnetic field applied to the snow-melting member having an inner diameter $d_0$[cm] when a current i[A] flows in the power-transmission line. $B_H$[G] (1 G $= 10^{-4}$ T) represents the flux density induced in the snow-melting member when it is subjected to a magnetic field with an intensity of H[Oe], and $\rho$ [$\mu \Omega \cdot$ cm] represents the electrical resistivity of the snow-melting member.

When an annular or tubular snow-melting member is used, $t_0$[cm] denotes the smaller value selected from the axial length of the snow-melting member and the thickness thereof. When a helical snow-melting member is used, $t_0$ [cm] represents the diameter of the cross section of the wire composing the helical snow-melting member. For example, as shown in Fig. 1, annular snow-melting member 1 has thickness $W_1$ which is smaller than its axial length $W_2$. Therefore, the thickness $W_1$ is used as the value of $t_0$. When the helical snow-melting member 2, as shown in Figs. 2A and 2B, consists of a wire having a circular cross section, the diameter of the wire is used as the value of $t_0$. When the transverse cross section of the snow-melting member, corresponding to the hatched portion in Fig. 1 or the cross section shown in Fig. 2B, is elliptical, polygonal or an other configuration, the shortest diameter of the transverse cross section is used as the value of $t_0$.

Preferably, the surface of the snow-melting member is protected by an anti-corrosion layer. The anti-corrosion layer is formed of aluminum cladding, galvanization or other surface treatment.

When the helical angle of the helical snow-melting member is between 3 degrees and 30 degrees, effective magnetic exothermic characteristics are provided. In addition, a helical snow-melting member with a helical angle in the above range can be easily attached around a power-transmission line.

As shown in Fig. 1, there is a clearance between the inner diameter $d_0$ of the snow-melting member 1 and the outer diameter $d_S$ of the power-transmission line 1a shown in phantom in Fig. 1. A friction member formed of rubber, for example, can be inserted into the clearance such that the snow-melting member and the power-transmission line are prevented from being displaced relative to each other. As shown in Fig. 2A, the inner diameter $d_0$ of the helical snow-melting member 2 equals the outer diameter $d_S$ of a power-transmission line 2a shown in phantom. However, the inner diameter $d_0$ of the snow-melting member 2 can be larger than the outer diameter $d_S$ of the power-transmission line 2a with a clearance therebetween into which a friction member for preventing displacement is interposed, in the same way as with the snow-melting member 1 shown in Fig. 1.

A plurality of snow-melting members embodying the invention formed of different alloys as shown in Table 1 were prepared in a vacuum dissolution method. The alloys were formed into the annular snow-melting member 1 shown in Fig. 1 and the helical snow-melting member 2 shown in Figs. 2A and 2B having dimensions as shown in Table 1.

When manufacturing the annular snow-melting member 1, the aforementioned alloy material was forged into a round bar. The round bar was then cut into a plurality of discs and a central hole was cut in each disc to form annular members. The annular members were thermally treated and subsequently galvanized such that the process deflection was removed and at the same time the crystal grains were made uniform. On the other hand, when manufacturing the helical snow-melting member 2, the aforementioned alloy material was first rolled to form a wire. The wire was then thermally treated, galvanized, and subsequently circled around a central axis into a coil shape, to form a helical member.

The following evaluation tests were then carried out to evaluate the effectiveness of the snow-melting members embodying the invention as follows.

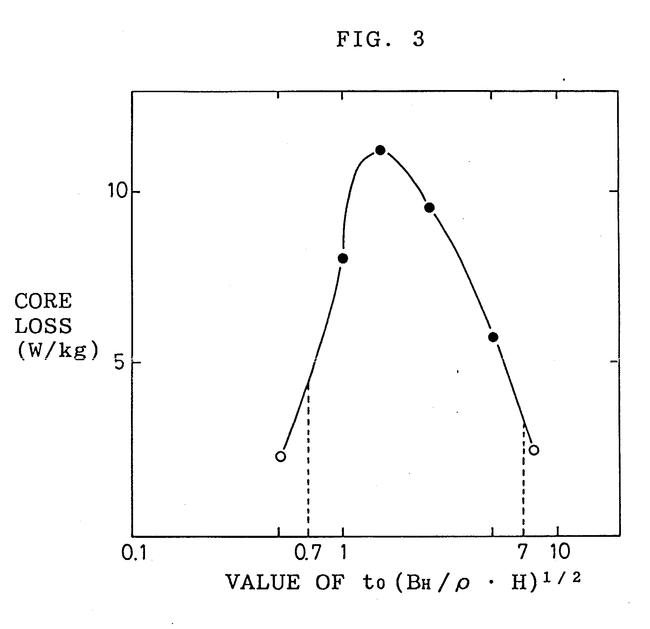

The basic electromagnetic characteristics and snow-melting properties of the snow-melting members formed as aforementioned were evaluated. The results of the evaluation test are shown in Tables 1-3 and Fig. 3. Reference examples were similarly tested for evaluation purposes. Embodiments 1-4, 9-11, and References 1,2,4 are annular snow-melting members, while Embodiments 5-8 and Reference 3 are helical snow-melting members.

For the following evaluation tests 1 and 3, test pieces formed of the materials and having the dimensions shown in Tables 1 and 3 were thermally treated under the heat treatment conditions shown in the tables. Thus, annular magnetic test pieces were prepared for measuring the basic electromagnetic characteristic thereof. For the evaluation test 2, wires having the diameters $d_0$ shown in Table 2 were wound ten turns into a helical form such that the helices had the inner diameters $d_0$ shown in Table 2. Subsequently, the wires were thermally treated under the heat treatment conditions shown in Table 2, and the test pieces were prepared for evaluation of their basic electromagnetic characteristics.

An H coil and a B coil were wound 100 turns and 20 turns, respectively, around the aforementioned test pieces. A direct current magnetizing curve B-H was drawn using the direct current B-H curve tracer, and the flux density $B_H$ [G] when subjected to the specified applied magnetic field H[Oe] was measured. For the core loss, an alternating current B-H curve was first drawn, and the core loss was calculated from the looped area. The measurements were made at a temperature of 0°C.

In order to measure the electrical resistivity $\rho$, test pieces were separately formed of the alloys shown in the tables with a diameter of 5mm and a length of 100mm, and were heat treated under the conditions shown in the tables. The electrical resistivity of the test pieces was measured using a direct current four terminal method also at 0°C.

The snow-melting properties of the test pieces were evaluated by supplying a current of 50Hz through power-transmission lines with the test snow-melting members shown in Table 1 attached thereto. The value of the supplied current was set such that the snow-melting members were subjected to the aforementioned specified applied magnetic field H[Oe] for measuring the basic electromagnetic characteristics.

EVALUATION TEST 1

The annular snow-melting members, Embodiments 1-4 and References 1,2, each formed of different materials and in different configurations were tested. The results are shown in Table 1.

In the tables the VALUE OF FORMULA (1) equals $H \cdot B_H$, and the VALUE OF FORMULA (2) equals $t_0(B_H/\rho \cdot H)^{1/2}$. As for the material of power-transmission line, ACSR stands for Aluminum Conductors Steel Reinforced. The marks of evaluation are interpreted as follows: indicates that the snow was sufficiently melted and no snow stuck to the snow-melting members or to the power-transmission line; $\triangle$ indicates that snow partially stuck to the snow-melting member as well as to the power-transmission line; and $\times$ indicates that much snow stuck to the snow-melting member as well as to the power-transmission line.

TABLE 1

| | EMBODIMENT | | | | REFERENCE | |
|---|---|---|---|---|---|---|
| | 1 | 2 | 3 | 4 | 1 | 2 |
| ALLOY COMPONENT (Fe:REMAINING%)[% BY WEIGHT] | Al  6 | Co49 V2 | Cr13 Si1 | Ni46 Mo4 | Al  6 | Ni32 |
| HEAT  TREATMENT CONDITION[°C]× [h] | 1000× 2 | 850× 2 | 850× 2 | 1000× 2 | 1000× 2 | 1000× 2 |
| DIMENSION[mm] OUTER DIA.× INNDER DIA.× HEIGHT | 31× 25× 10 | 29× 25× 15 | 50× 40× 10 | 60× 40× 20 | 27× 25× 10 | 31× 25× 10 |
| do  [cm] | 2.5 | 2.5 | 4.0 | 4.0 | 2.5 | 2.5 |
| to  [cm] | 0.3 | 0.2 | 0.5 | 2.0 | 0.1 | 0.3 |
| BASIC ELECTROMAGNETIC CHARACTERISTIC APPLIED MAGNETIC FIELD H[Oe] | 7 | 10 | 20 | 15 | 7 | 7 |
| MAGNETIC FLUX DENSITY $B_H$ [G] | 12,800 | 19,700 | 13,000 | 12,600 | 12,800 | 5,100 |
| CORE LOSS          Pc [W/kg] | 11.2 | 17.4 | 21.7 | 5.8 | 2.3 | 2.6 |
| ELECTRICAL RESISTIVITY$\rho$ [$\mu \Omega \cdot$ cm] | 70 | 43 | 68 | 76 | 70 | 87 |
| VALUE OF FORMULA (1) | 89,600 | 197,000 | 260,000 | 189,000 | 89,600 | 35,700 |
| VALUE OF FORMULA (2) | 1.5 | 1.4 | 1.5 | 6.6 | 0.5 | 0.9 |
| SNOW MELTING PROPERTY POWER TRANSMISSION LINE | ACSR $240mm^2$ | ACSR $240mm^2$ | ACSR $810mm^2$ | ACSR $810mm^2$ | ACSR $240mm^2$ | ACSR $240mm^2$ |
| ELECTRICAL CURRENT i[A] | 44 | 63 | 200 | 150 | 44 | 44 |
| DEGREE OF SNOW MELTING | O | O | O | Δ | × | × |

EP 0 651 487 B1

As shown in Table 1, Embodiments 1-3 provide a superior snow-melting property. Embodiment 4 also provides a good snow-melting property, although it is slightly inferior to that of Embodiments 1-3. Embodiment 4 has a value close to the upper limit 7 of formula (2). References 1 and 2 have insufficient snow-melting properties. It can be seen that the value of formula(2) of Reference 1 and the value of formula (1) of Reference 2 are less than the range of the present invention, respectively. Consequently, Embodiments 1-4 according to the invention are superior to References 1,2 in snow-melting property.

EVALUATION TEST 2

The helical snow-melting members, Embodiments 5-8 and Reference 3, each formed of different materials and in a different configuration were tested. The results are shown in Table 2.

**TABLE 2**

| | EMBODIMENT 5 | 6 | 7 | 8 | REFERENCE 3 |
|---|---|---|---|---|---|
| ALLOY COMPONENT (Fe:REMAINING%)[% BY WEIGHT] | Al 6 | Ni45 Cu3 | Cr13 Si1 | Co50 | Al 6 |
| HEAT TREATMENT CONDITION[°C]×[h] | 1000×2 | 1000×2 | 850×2 | 850×2 | 1000×2 |
| DIMENSION[mm] WIRE DIA.×INNER DIA. | 3×25 | 2.5×25 | 3.5×40 | 4×40 | 1.5×40 |
| d₀ [cm] / $d_0$ [cm] | 2.5 | 2.5 | 4.0 | 4.0 | 4.0 |
| t₀ [cm] / $t_0$ [cm] | 0.3 | 0.25 | 0.35 | 0.4 | 0.15 |
| BASIC ELECTROMAGNETIC CHARACTERISTIC APPLIED MAGNETIC FIELD H[Oe] | 7 | 10 | 20 | 15 | 15 |
| MAGNETIC FLUX DENSITY $B_{II}$ [G] | 12,500 | 13,500 | 12,700 | 19,500 | 12,600. |
| CORE LOSS Pc [W/kg] | 10.7 | 9.3 | 16.0 | 6.7 | 3.1 |
| ELECTRICAL RESISTIVITY $\rho$ [$\mu \Omega \cdot cm$] | 70 | 67 | 68 | 6 | 70 |
| VALUE OF FORMULA (1) | 87,500 | 135,000 | 254,000 | 292,500 | 189,000 |
| VALUE OF FORMULA (2) | 1.5 | 1.1 | 1.1 | 5.9 | 0.5 |
| SNOW MELTING PROPERTY POWER TRANSMISSION LINE | ACSR 240mm² | ACSR 240mm² | ACSR 810mm² | ACSR 810mm² | ACSR 810mm² |
| ELECTRICAL CURRENT i [A] | 44 | 63 | 200 | 150 | 150 |
| DEGREE OF SNOW MELTING | ○ | ○ | ○ | △ | × |

As shown in Table 2, Embodiments 5-7 provide a superior snow-melting property. Embodiment 8 also provides a good snow-melting property, although it is slightly inferior to that of Embodiments 5-7. As shown, Embodiment 8 has a value close to the upper limit 7 of formula (2). Reference 3 has insufficient snow-melting property and a value of formula(2) that is less than the range of the present invention. Consequently, Embodiments 5-8 according to the invention are superior to Reference 3 in snow-melting effectiveness.

8

EVALUATION TEST 3

The annular snow-melting members, Embodiments 1, 9-11 and References 1, 4, composed of the same material but different from each other in configuration were attached around power-transmission lines of the same type with the same current supplied therethrough, and were tested. The results are shown in Table 3.

TABLE 3

| | EMBODIMENT | | | | REFERENCE | |
|---|---|---|---|---|---|---|
| | 9 | 1 | 10 | 11 | 1 | 4 |
| ALLOY COMPONENT (Fe:REMAINING%)[% BY WEIGHT] | Al 6 | | | | | |
| HEAT TREATMENT CONDITION[°C]× [h] | 1000× 2 | | | | | |
| DIMENSION[mm] OUTER DIA.× INNDER DIA.× HEIGHT | 29× 25× 10 | 31× 25× 15 | 35× 25× 10 | 45× 25× 10 | 27× 25× 10 | 55× 25× 15 |
| do [cm] | 2.5 | | | | | |
| to [cm] | 0.2 | 0.3 | 0.5 | 1.0 | 0.1 | 1.5 |
| BASIC ELECTROMAGNETIC CHARACTERISTIC APPLIED MAGNETIC FIELD H[Oe] | 7 | | | | | |
| MAGNETIC FLUX DENSITY $B_H$ [G] | 12,800 | | | | | |
| CORE LOSS Pc [W/kg] | 8.0 | 11.2 | 9.5 | 5.7 | 2.3 | 2.5 |
| ELECTRICAL RESISTIVITY $\rho$ [$\mu \Omega \cdot$ cm] | 70 | | | | | |
| VALUE OF FORMULA (1) | 89,600 | | | | | |
| VALUE OF FORMULA (2) | 1.02 | 1.53 | 2.56 | 5.11 | 0.53 | 7.67 |
| SNOW MELTING PROPERTY POWER TRANSMISSION LINE | ACSR 240mm$^2$ | | | | | |
| ELECTRICAL CURRENT i[A] | 44 | | | | | |
| DEGREE OF SNOW MELTING | O | O | O | O | × | × |

EP 0 651 487 B1

As shown in Table 3, Embodiments 1, 9-11 provide a superior snow-melting property. On the other hand, References 1 and 4 have an insufficient snow-melting property and the value of formula(2) for Reference 1 is less than the range of the present invention and the value of formula(2) for Reference 4 exceeds the range of the present invention. Consequently, Embodiments 1, 9-11 according to the invention are superior to References 1, 4 in snow-melting property.

Fig. 3 is a graph resulting from the evaluation test 3 of the annular snow-melting members composed of 6% by weight of aluminum and the remaining percentage by weight of iron, Embodiments 1, 9-11 and References 1, 4. In the graph the value of formula(2) $t_0(B_H/\rho \cdot H)^{1/2}$ and the core loss are plotted, and a logarithmic scale is used for formula (2) on the horizontal coordinate. The white circles on the graph indicate that the corresponding snow-melting member insufficiently melted the snow and the black circles indicate that the corresponding snow-melting member effectively melted the snow. As shown in Fig. 3, when the value of formula (2) is in the range of the present invention, specifically when the value is between 0.7 and 7, the core loss is increased. The snow-melting members according to the invention generate a relatively large amount of heat, thereby effectively melting the snow.

As shown in Table 4 the Fe-Al system alloys containing aluminum in the amount shown in Table 4 were dissolved in a vacuum fusion furnace, cast and, rolled. Subsequently, a thermal treatment and wire drawing processes were alternately repeated on the alloys. Thus, a wire having a diameter of 3mm was produced and was then magnetically annealed.

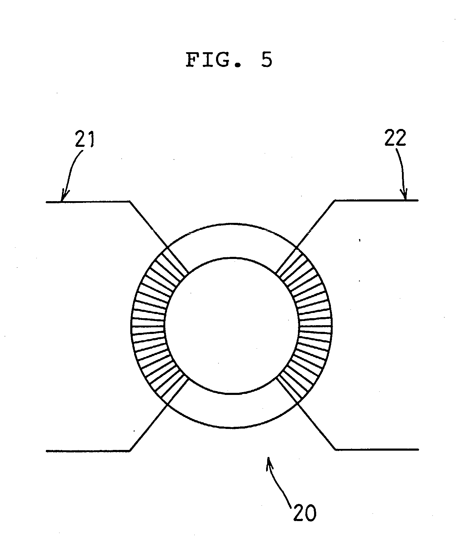

The resulting wire having a diameter of 3mm was wound four turns around a cylindrical member having a diameter of 22.4mm to form a helical sample 20 for measuring the core loss. As shown in Fig. 5 a primary coil 21 and a secondary coil 22 were wound 20 turns, respectively, around the sample 20. An electric current of 3.2A, obtained from the following equation (10), was applied to the primary coil 21, such that an alternating magnetic field having a maximum intensity of 10 Oe and a frequency of 60Hz were generated at the primary coil 21. Consequently, voltage was generated at the secondary coil 22 by the sample 20.

$$I=(10\ell/4\pi )\cdot H/N \qquad\qquad (10)$$

In the equation I denotes the electric current[A], $\ell$ denotes the average magnetic path length[mm], H denotes the intensity of the magnetic field in [Oe] and N denotes the number of coil windings.

Under the above conditions, the difference between the electric current of the primary coil 21 and the electric power of the secondary coil 22 was measured using a wattmeter. Then the core loss or the amount of heat generated per a unit weight [W/kg] in the sample 20 was calculated.

The measurements were made in atmospheric conditions at a temperature of 0°C simulating the winter season. The results are also shown in Table 4. In the column labeled wire material processability in Table 4, NG indicates that the wire material was linearly cracked and OK indicates that no cracks were found in the wire material.

For the purpose of comparison, the wire material of Fe-Ni system alloy containing 36% by weight of nickel was used as the prior-art example.

The wire was wound around a standard power-transmission line of $240mm^2$, and the snow or ice sticking to the power-transmission line in the simulated winter season was observed. No snow was observed around the wire embodying the present invention. However, snow was seen partially around the wire material of the prior-art example.

TABLE 4

|  | ALLOY COMPONENT [% BY WEIGHT] | | WIRE PROCESSABILITY | AMOUNT OF HEAT GENERATED WHEN SUBJECTED TO 10 Oe [W/kg] |
|---|---|---|---|---|
|  | Al | Fe |  |  |
| EMBODIMENT12 | 1.5 | REMAINING | OK | 11.3 |
| EMBODIMENT13 | 3.0 | REMAINING | OK | 12.9 |
| EMBODIMENT14 | 6.5 | REMAINING | OK | 14.8 |
| EMBODIMENT15 | 9.0 | REMAINING | OK | 14.2 |
| EMBODIMENT16 | 14.0 | REMAINING | OK | 12.4 |
| REFERENCE 5 | 0.5 | REMAINING | OK | 8.5 |
| REFERENCE 6 | 16.0 | REMAINING | NG | 7.8 |

TABLE 4 (continued)

| | ALLOY COMPONENT [% BY WEIGHT] | | WIRE PROCESSABILITY | AMOUNT OF HEAT GENERATED WHEN SUBJECTED TO 10 Oe [W/kg] |
|---|---|---|---|---|
| | Al | Fe | | |
| PRIOR-ART EXAMPLE | | | OK | 4.5 |

In another test, the alloys having the compositions shown in Table 4 were cast into annular members having an outer diameter of 30mm, an inner diameter of 24mm and a width of 15mm. To increase the amount of heat generated, the annular members were magnetically annealed in the same way as soft magnetic bodies are conventionally annealed.

The core loss of the annular members was measured in the same way as that of the helical wire members. An electric current of 3.4A was applied to a primary coil 21 wound around the annular member. When, an alternating magnetic field having a maximum intensity of 10 Oe and a frequency of 60Hz was applied to the primary coil 21, the amount of heat generated per a unit weight [W/kg] was measured using a core loss measuring apparatus. The measurements were made at a temperature of 0°C simulating the winter season. The results are shown in Table 5. In the column labeled annular member processability in Table 5, NG indicates that the annular member was cracked or chipped and OK indicates that no cracks or chips were found in the annular member.

For the purpose of comparison, an annular member of Permalloy was used as the prior-art example.

The annular members were attached around a standard power-transmission line of $240mm^2$, and the snow or ice sticking to the power-transmission line in the simulated winter season was observed. No snow was observed around the annular members embodying the present invention. However, snow was seen partially around the annular member of the prior-art example.

TABLE 5

| | ALLOY COMPONENT [% BY WEIGHT] | | RING PROCESSABILITY | AMOUNT OF HEAT GENERATED WHEN SUBJECTED TO 10 Oe [W/kg] |
|---|---|---|---|---|
| | Al | Fe | | |
| EMBODIMENT12 | 1.5 | REMAINING | OK | 10.8 |
| EMBODIMENT13 | 3.0 | REMAINING | OK | 12.1 |
| EMBODIMENT14 | 6.5 | REMAINING | OK | 14.7 |
| EMBODIMENT15 | 9.0 | REMAINING | OK | 14.0 |
| EMBODIMENT16 | 14.0 | REMAINING | OK | 12.6 |
| REFERENCE 5 | 0.5 | REMAINING | OK | 9.1 |
| REFERENCE 6 | 16.0 | REMAINING | NG | 7.5 |
| PRIOR-ART EXAMPLE | | | OK | 5.3 |

This invention has been described above with reference to the preferred embodiments as shown in the figures and tables. Modifications and alterations may become apparent to one skilled in the art upon reading and understanding the specification. Despite the use of the embodiments for illustration purposes, the invention is intended to include all such modifications and alterations within the scope of the appended claims.

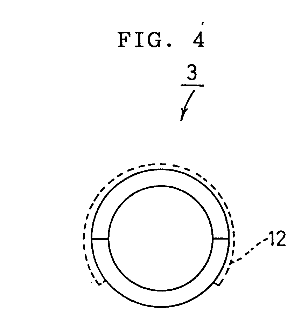

According to a preferred embodiment of the invention, as shown in Fig. 4, an annular snow-melting member 3 is divisible into two members. The outer periphery of the annular snow-melting member 3 is preferably held by a resilient C-shaped ring 12 such that the annular snow-melting member 3 can be easily attached around a power-transmission line.

The snow-melting members for use on power-transmission lines according to the present invention not only prevent snow from sticking to the line by melting the snow but also prevent ice from sticking to the line by melting the ice.

As aforementioned, the snow-melting member for use on power-transmission lines according to the present invention can sufficiently melt snow even if only a small magnetic field is present. Therefore, in the winter season when the current in a power-transmission line is small, the power-transmission line can still be protected from snow or ice by the snow-melting member.

When the snow-melting member is composed of Fe-Al system alloy, the amount of heat generated at a low temperature is large. Consequently, the power-transmission line can be protected from snow or ice by the snow-melting member.

## Claims

1. A snow melting member for a power transmission line, said member being formed of at least one of metals and metal oxides and having either an annular, a tubular or a helical configuration and being dimensioned such that it satisfies the electromagnetic properties defined by formulas (1) and (2), in which:

$$(1) \qquad H x\, B_H \geq 40,000$$

$$(2) \qquad 0.7 \leq t_0\, (B_H / \rho \cdot H)^{\frac{1}{2}} \leq 7$$

in the formulas:

H equals $0.4(i/d_0)$ and represents the magnetic field intensity in Oersteds [Oe] of a magnetic field, created by an electrical current in a said power transmission line, where it coincides with said snow melting member;
i represents an electric current in a said power transmission line in Amperes;
$d_0$ represents the inner diameter of the snow melting member in centimeters;
$B_H$ represents the flux density in Gauss induced in the snow melting member when a magnetic field of intensity H[Oe] is applied to the snow melting member by a current flowing in a said power transmission line;
$\rho$ represents the electrical resistivity of the snow melting member in micro-ohm centimeter; and
$t_0$ represents the smaller value selected from the axial length of said snow melting member and the thickness thereof for a said annular and a said tubular snow melting member; and represents the smallest diameter of a cross section of a wire forming a said helical snow melting member.

2. A snow melting member according to claim 1, wherein said metals composing the snow melting member are selected from the group consisting of an iron-based alloy, a cobalt-based alloy and a nickel-based alloy.

3. A snow melting member according to claim 1, wherein the snow melting member is helical, and the helical angle is in a range from about 3 degrees to about 30 degrees.

4. A snow melting member according to claim 2, said snow melting being composed of a Fe-Al system alloy containing 1 to 15% by weight of aluminum and the remaining percentage being composed of iron and unavoidable impurities.

5. A snow melting member according to claim 4, wherein the snow melting member is a wire and is wound in a helical configuration around a said power transmission line.

6. A snow melting member according to claim 4, wherein the snow melting member is one of an annular and a tubular member.

7. A snow melting member according to claim 1, wherein the inner diameter of the snow melting member is larger than the outer diameter of a said power transmission line, such that an annular clearance is formed between said member and said line when said member is mounted on said line, and an annular friction element is provided for insertion into said clearance to prevent said member and said line from being displaced relative to one another.

8. A method of melting snow off of an electric power transmission line comprising the steps of:
providing a snow melting member having one of an annular, tubular, and helical configuration and being composed of at least one of metals and metal oxides, said snow melting member having dimensions and properties defined by formulas (1) and (2), in which:

$$(1) \qquad H \times B_H \geqq 40,000$$

$$(2) \qquad 0.7 \leqq t_0 (B_H / \rho \cdot H)^{1/2} \leqq 7$$

in the formulas:

H equals $0.4(i/d_0)$ and represents the magnetic field intensity in Oersteds [Oe] of a magnetic field, created by an electrical current in a said power transmission line, where it coincides with said snow melting member;

i represents an electric current in a said power transmission line in Amperes;

$d_0$ represents the inner diameter of the snow melting member in centimeters;

$B_H$ represents the flux density in Gauss induced in the snow melting member when a magnetic field of intensity H[Oe] is applied to the snow melting member by a current flowing in a said power transmission line;

$\rho$ represents the electrical resistivity of the snow melting member in micro-ohms per centimeter;

to represents the smaller value selected from the axial length of said snow melting member and the thickness thereof for a said annular and a said tubular snow melting member; and represents the smallest diameter of a cross section of a wire forming a said helical snow melting member; and

mounting the snow melting member to a said power transmission line, such that the member surrounds said power transmission line.

9. A method according to claim 8, providing a helical snow melting member having a helical angle in a range from about 3 degrees to about 30 degrees.

10. A method according to claim 8, providing a said snow melting member composed of a Fe-A1 system alloy containing 1 to 15% by weight of aluminum and the remaining percentage being composed of iron and unavoidable impurities.

11. A method according to claim 10, providing one of an annular and a tubular snow melting member.

12. A method according to claim 10, providing a helical snow melting member.

13. A method according to claim 8, providing one of an annular and a tubular helical snow melting member having at least one joint for attaching said member to a said power transmission line.

14. An electric power transmission line comprising:

an electrically conductive cable having at least one snow melting member surrounding an outer periphery of said cable, wherein:

the snow melting member is formed in one of a tubular, annular, and helical configuration and is composed of at least one of metals and metal oxides such that is has dimensions and electromagnetic properties that satisfy the following formulas:

$$(1) \qquad H \times B_H \geqq 40,000$$

$$(2) \qquad 0.7 \leqq t_0 (B_H / \rho \cdot H)^{1/2} \leqq 7$$

in the formulas:

H equals $0.4(i/d_0)$ and represents the magnetic field intensity in Oersteds [Oe] of a magnetic field, created by an electrical current in a said power transmission line, where it coincides with said snow melting member;

i represents an electric current in a said power transmission line in Amperes;

do represents the inner diameter of the snow melting member in centimeters;

$B_H$ represents the flux density in Gauss induced in the snow melting member by a magnetic field having an intensity of H[Oe] that is applied to the snow melting member by a current flowing in a said power transmission line;

$\rho$ represents the electrical resistivity of the snow melting member in micro-ohm centimeter; and

$t_0$ represents the smaller value selected from the axial length of said snow melting member and the thickness thereof for a said annular and a said tubular snow melting member; and represents the smallest diameter of a cross section of a wire forming a said helical snow melting member.

15. A power transmission line according to claim 14, wherein the snow melting member has one of an annular and a tubular configuration and is provided in its circumferential direction with at least one joint for attaching said member to said power transmission line.

16. A power transmission line according to claim 14, wherein the snow melting member is helical, and the helical angle is in a range from about 3 degrees to about 30 degrees.

17. A power transmission line according to claim 14, said snow melting member being composed of a Fe-Al system alloy containing 1 to 15% by weight of aluminum and the remaining percentage being composed of iron and unavoidable impurities.

18. A power transmission line according to claim 17, wherein the snow melting member is a wire and is wound in a helical configuration around a said power transmission line.

19. A power transmission line according to claim 17, wherein the snow melting member is one of an annular and a tubular member.

**Patentansprüche**

1. Schneeschmelzvorrichtung für eine Energieübertragungsleitung, wobei die Vorrichtung aus wenigstens einem Metall oder Metalloxyd gebildet ist und entweder eine ringförmige, eine zylinderförmige oder eine schraubenähnlich gewundene Gestalt aufweist und derart dimensioniert ist, daß sie die durch die Formeln (1) und (2) definierten elektromagnetischen Eigenschaften erfüllt, in denen:

$$(1) \qquad H x\ B_H \geq 40000$$

$$(2) \qquad 0{,}7 \leq t_0\ (B_H / \rho \cdot H)^{\frac{1}{2}} \leq 7$$

in den Formeln ist:

H ist gleich 0,4 (i/d0) und stellt die magnetische Feldstärke in Oersted [Oe] eines durch einen elektrischen Strom in der Energieübertragungsleitung gebildeten magnetischen Feldes dar, wo es mit der Schneeschmelzvorrichtung koinzidiert;

i stellt den elektrischen Strom in der Energieübertragungsleitung in Ampere dar;

d0 stellt den Innendurchmesser der Schneeschmelzvorrichtung in Zentimetern dar;

$B_H$ stellt die in der Schneeschmelzvorrichtung induzierte Flussdichte in Gauß dar, wenn ein magnetisches Feld der Intensität H [Oe] durch einen in der Energieübertragungsleitung fließenden Strom auf die Schneeschmelzvorrichtung einwirkt;

$\rho$ stellt den spezifischen elektrischen Widerstand der Schneeschmelzvorrichtung in Micro-Ohm-Zentimetern dar; und

t0 stellt für die ringförmige und die zylinderförmige Schneeschmelzvorrichtung den aus der axialen Länge der Schneeschmelzvorrichtung und deren Dicke ausgewählten, kleineren Wert dar, und stellt den kleinsten Durchmesser eines Querschnittes eines Drahtes dar, der die schraubenähnlich gewundene Schneeschmelzvorrichtung bildet.

2. Schneeschmelzvorrichtung nach Anspruch 1, wobei die Metalle, aus denen sich die Schneeschmelzvorrichtung zusammensetzt, aus einer Gruppe ausgewählt werden, die aus einer auf Eisen basierenden Legierung, einer auf Kobalt basierenden Legierung und einer auf Nickel basierenden Legierung besteht.

3. Schneeschmelzvorrichtung nach Anspruch 1, wobei die Schneeschmelzvorrichtung schraubenartig gewunden ist und der Schraubenwinkel in einem Bereich von etwa 3 Grad bis etwa 30 Grad liegt.

4. Schneeschmelzvorrichtung nach Anspruch 2, wobei die Schneeschmelzvorrichtung aus einer Fe-Al-System-Legierung zusammengesetzt ist, die nach Gewicht 1 bis 15 % Aluminium enthält, wobei der verbleibende Prozentsatz aus Eisen und unvermeidbaren Verunreinigungen zusammengesetzt ist.

5. Schneeschmelzvorrichtung nach Anspruch 4, wobei die Schneeschmelzvorrichtung ein Draht ist und in einer schrauben ähnlich gewundenen Gestalt um die Energie übertragungsleitung gewickelt ist.

6. Schneeschmelzvorrichtung nach Anspruch 4, wobei die Schneeschmelzvorrichtung eine ringförmige oder zylinderförmige Vorrichtung ist.

7. Schneeschmelzvorrichtung nach Anspruch 1, wobei der Innendurchmesser der Schneeschmelzvorrichtung größer ist als der Außendurchmesser der Energie übertragungsleitung, so daß ein ringförmiger Spalt zwischen der Vorrichtung und der Leitung gebildet ist, wenn die Vorrichtung an der Leitung angebracht ist, und wobei ein ringförmiges Reibungselement für das Einfügen in den Spalt vorgesehen ist, um zu verhindern, daß die Vorrichtung und die Leitung relativ zueinander verschoben werden.

8. Verfahren zum Wegschmelzen von Schnee von einer Energie übertragungsleitung, das die Schritte aufweist: Vorsehen einer Schneeschmelzvorrichtung, die eine ringförmige, zylinderförmige oder schraubenartig gewundene Gestalt aufweist und zumindest aus einem Metall oder Metalloxyd zusammengesetzt ist, wobei die Schneeschmelzvorrichtung Dimensionen und Eigenschaften aufweist, die durch die Formeln (1) und (2) definiert sind, in denen:

$$(1) \qquad H x \, B_H \geq 40000$$

$$(2) \qquad 0,7 \leq t_0 \, (B_H / \, \rho \, . \, H)^{\frac{1}{2}} \leq 7$$

in den Formeln ist:

H ist gleich 0,4 (i/d0) und stellt die magnetische Feldstärke in Oersted [Oe] eines durch einen elektrischen Strom in der Energie übertragungsleitung gebildeten magnetischen Feldes dar, wo es mit der Schneeschmelzvorrichtung koinzidiert;

i stellt den elektrischen Strom der Energie übertragungsleitung in Ampere dar;

d0 stellt den Innendurchmesser der Schneeschmelzvorrichtung in Zentimetern dar;

$B_H$ stellt die in der Schneeschmelzvorrichtung induzierte Flussdichte in Gauß dar, wenn ein magnetisches Feld der Intensität H [Oe] durch einen in der Energie übertragungsleitung fließenden Strom auf die Schneeschmelzvorrichtung einwirkt;

p stellt den spezifischen elektrischen Widerstand der Schneeschmelzvorrichtung in Micro-Ohm pro Zentimeter dar.

t0 stellt für die ringförmige und die zylinderförmige Schneeschmelzvorrichtung den aus der axialen Länge der Schneeschmelzvorrichtung und deren Dicke ausgewählten, kleineren Wert dar, und stellt den kleinsten Durchmesser eines Querschnittes eines Drahtes dar, der die schrauben ähnlich gewundene Schneeschmelzvorrichtung bildet; und

die Schneeschmelzvorrichtung an der Energie übertragungsleitung anzubringen, so daß die Vorrichtung die Energie übertragungsleitung umgibt.

9. Verfahren nach Anspruch 8, bei dem eine schraubenartig gewundene Schneeschmelzvorrichtung vorgesehen ist, die einen Schraubenwinkel in einem Bereich von etwa 3 Grad bis etwa 30 Grad aufweist.

10. Verfahren nach Anspruch 8, bei dem eine Schneeschmelzvorrichtung vorgesehen ist, die aus einer Fe-Al-System-Legierung zusammengesetzt ist, die nach Gewicht 1 bis 15 % Aluminium enthält, wobei der verbleibende Prozentsatz aus Eisen und unvermeidbaren Verunreinigungen zusammengesetzt ist.

11. Verfahren nach Anspruch 10, bei dem eine ringförmige oder eine zylinderförmige Schneeschmelzvorrichtung vorgesehen ist.

12. Verfahren nach Anspruch 10, bei dem eine schraubenartig gewundene Schneeschmelzvorrichtung vorgesehen ist.

13. Verfahren nach Anspruch 8, bei dem eine ringförmige oder eine zylinderförmige, schraubenartig gewundene Schneeschmelzvorrichtung vorgesehen ist, die wenigstens eine Verbindungsstelle zum Anbringen der Vorrichtung an der Energieübertragungsleitung aufweist.

14. Elektrische Energieübertragungsleitung, die ein elektrisch leitfähiges Kabel enthält, das mindestens ein eine Außenperipherie des Kabels umgebende Schneeschmelzvorrichtung aufweist, wobei die Schneeschmelzvorrichtung in einer zylinderförmigen, ringförmigen oder schraubenartig gewundenen Gestalt gebildet ist und aus zumindest einem Metall oder Metalloxyd zusammengesetzt ist, so daß es Dimensionen und elektromagnetische Eigenschaften aufweist, die die folgenden Formeln erfüllen:

$$(1) \qquad Hx\, B_H \geq 40000$$

$$(2) \qquad 0{,}7 \leq t_0\, (B_H / \rho \cdot H)^{\frac{1}{2}} \leq 7$$

in den Formeln ist:

H ist gleich 0,4 (i/d0) und stellt die magnetische Feldstärke in Oersted [Oe] eines durch einen elktrischen Strom in der Energieübertragungsleitung gebildeten magnetischen Feldes dar, wo es mit der Schneeschmelzvorrichtung koinzidiert;

i stellt den elektrischen Strom in der Energieübertragungsleitung in Ampere dar;

d0 stellt den Innendurchmesser der Schneeschmelzvorrichtung in Zentimetern dar;

$B_H$ stellt die in der Schneeschmelzvorrichtung durch ein eine Intensität von H [Oe] aufweisendes magnetisches Feld induzierte Flussdichte in Gauß dar, das durch einen in der Energieübertragungsleitung fließenden Strom auf die Schneeschmelzvorrichtung einwirkt;

$\rho$ stellt den spezifischen elektrischen Widerstand der Schneeschmelzvorrichtung in Micro-Ohm-Zentimetern dar;

und t0 stellt für die ringförmige und die zylinderförmige Schneeschmelzvorrichtung den aus der axialen Länge der Schneeschmelzvorrichtung und deren Dicke ausgewählten, kleineren Wert dar, und stellt den kleinsten Durchmesser eines Querschnittes eines Drahtes dar, der die schraubenähnlich gewundene Schneeschmelzvorrichtung bildet.

15. Energieübertragungsleitung nach Anspruch 14, wobei die Schneeschmelzvorrichtung eine ringförmige oder zylinderförmige Gestalt aufweist und in ihrer Umfangsrichtung mit wenigstens einer Verbindungsstelle versehen ist, um die Vorrichtung an der Energieübertragungsleitung anzubringen.

16. Energieübertragungsleitung nach Anspruch 14, wobei die Schneeschmelzvorrichtung schraubenartig gewunden ist und der Schraubenwinkel in einem Bereich von etwa 3 Grad bis etwa 30 Grad liegt.

17. Energieübertragungsleitung nach Anspruch 14, wobei die Schneeschmelzvorrichtung aus einer Fe-Al-System-Legierung zusammengesetzt ist, die nach Gewicht 1 bis 15 % Aluminium enthält, wobei der verbleibende Prozentsatz aus Eisen und unvermeidlichen Verunreinigungen zusammengesetzt ist.

18. Energieübertragungsleitung nach Anspruch 17, wobei die Schneeschmelzvorrichtung ein Draht ist und in einer schraubenähnlich gewundenen Gestalt um die Energieübertragungsleitung gewickelt ist.

19. Energieübertragungsleitung nach Anspruch 17, wobei die Schneeschmelzvorrichtung eine ringförmige oder zylinderförmige Vorrichtung ist.

**Revendications**

1. Élément pour faire fondre la neige sur une ligne de transmission électrique, ledit élément étant formé d'au moins l'un de métaux et d'oxydes métalliques et ayant une configuration annulaire, tubulaire ou hélicoïdale, et étant dimensionné en sorte de satisfaire aux propriétés électromagnétiques définies par les formules (1) et (2), dans lesquelles :

$$(1) \qquad H_x B_H \geq 40\,000$$

$$(2) \qquad 0{,}7 \leq t_0 \, (B_H / \rho \, . \, H)^{\frac{1}{2}} \leq 7$$

dans les formules :

H est égal à $0{,}4(i/d_0)$ et représente l'intensité de champ magnétique en Oersted [Oe] d'un champ magnétique créé par un courant électrique passant dans ladite ligne de transmission électrique, là où il coïncide avec ledit élément pour fondre la neige ;
i représente un courant électrique passant dans ladite ligne de transmission électrique, en ampères ;
$d_0$ représente le diamètre intérieur de l'élément pour fondre la neige, en centimètres ;
$B_H$ représente la densité de flux, en Gauss, induite dans l'élément pour fondre la neige, lorsqu'un champ magnétique d'intensité H[Oe] est appliqué à l'élément pour fondre la neige, par un courant passant dans ladite ligne de transmission électrique ;
$\rho$ représente la résistivité électrique de l'élément pour fondre la neige, en micro-ohms centimètre ; et
$t_0$ représente la plus petite valeur choisie parmi la longueur axiale dudit élément pour fondre la neige et son épaisseur pour un élément pour fondre la neige de type annulaire et tubulaire ; et représente le plus petit diamètre d'une section transversale d'un fil formant undit élément pour fondre la neige de type hélicoïdal.

2. Élément pour fondre la neige selon la revendication 1, dans lequel lesdits métaux composant l'élément pour fondre la neige sont choisis dans le groupe constitué d'un alliage à base de fer, d'un alliage à base de cobalt et d'un alliage à base de nickel.

3. Élément pour fondre la neige selon la revendication 1, dans lequel ledit élément pour fondre la neige est hélicoïdal, et l'angle d'hélice est compris entre environ 3 degrés et environ 30 degrés.

4. Élément pour fondre la neige selon la revendication 2, dans lequel ledit élément pour fondre la neige est composé d'un alliage du système Fe-Al contenant de 1 à 15% en poids d'aluminium, et le pourcentage restant étant composé de fer et d'impuretés inévitables.

5. Élément pour fondre la neige selon la revendication 4, dans lequel l'élément pour fondre la neige est un fil et est enroulé selon une configuration hélicoïdale autour de ladite ligne de transmission électrique.

6. Élément pour fondre la neige selon la revendication 4, dans lequel l'élément pour fondre la neige est un élément annulaire ou tubulaire.

7. Élément pour fondre la neige selon la revendication 1, dans lequel le diamètre intérieur de l'élément pour fondre la neige est supérieur au diamètre extérieur de ladite ligne de transmission électrique, de sorte qu'il se forme un jeu annulaire entre ledit élément et ladite ligne lorsque ledit élément est monté sur ladite ligne, et un élément de friction annulaire est prévu pour s'insérer dans ledit jeu afin d'empêcher ledit élément et ladite ligne de se déplacer l'un par rapport à l'autre.

8. Procédé pour faire fondre la neige depuis une ligne de transmission électrique, comprenant les étapes consistant à :

prévoir un élément pour fondre la neige ayant une configuration annulaire, tubulaire ou hélicoïdale et étant composé d'au moins l'un de métaux ou d'oxydes métalliques, ledit élément pour fondre la neige ayant des dimensions et des propriétés définies par les formules (1) et (2), dans lesquelles :

$$(1) \qquad H_x \, B_H \geqq 40\,000$$

$$(2) \qquad 0,7 \leqq t_0 \, (B_H/\rho \cdot H)^{1/2} \leqq 7$$

dans les formules :

H est égal à 0,4 $(i/d_0)$ et représente l'intensité de champ magnétique en Oersted [Oe] d'un champ magnétique créé par un courant électrique passant dans ladite ligne de transmission électrique, la où elle coïncide avec ledit élément pour fondre la neige ;
i représente un courant électrique passant dans ladite ligne de transmission électrique, en ampères ;
$d_o$ représente le diamètre intérieur de l'élément pour fondre la neige, en centimètres ;
$B_H$ représente la densité de flux, en Gauss, induite dans l'élément pour fondre la neige, lorsqu'un champ magnétique d'intensité H[Oe] est appliqué à l'élément pour fondre la neige, par un courant passant dans ladite ligne de transmission électrique ;
$\rho$ représente la résistivité électrique de l'élément pour fondre la neige, en micro-ohms centimètre ; et
$t_0$ représente la plus petite valeur choisie parmi la longueur axiale dudit élément pour fondre la neige et son épaisseur, pour un élément pour fondre la neige de type annulaire et tubulaire ; et représente la plus petit diamètre d'une section transversale d'un fil formant un élément pour fondre la neige de type hélicoïdal ; et monter l'élément pour fondre la neige sur ladite ligne de transmission électrique, en sorte que l'élément entoure ladite ligne de transmission électrique.

9. Procédé selon la revendication 8, utilisant un élément pour fondre la neige de type hélicoïdal ayant un angle d'hélice compris entre environ 3 degrés et environ 30 degrés.

10. Procédé selon la revendication 8, utilisant un élément pour fondre la neige composé d'un alliage du système Fe-Al contenant de 1 à 15% en poids d'aluminium et le pourcentage restant étant composé de fer et d'impuretés inévitables.

11. Procédé selon la revendication 10, utilisant un élément pour fondre la neige de type annulaire ou tubulaire.

12. Procédé selon la revendication 10, utilisant un élément pour fondre la neige de type hélicoïdal.

13. Procédé selon la revendication 8, utilisant un élément pour fondre la neige de type annulaire ou hélicoïdal tubulaire, ayant au moins un joint pour fixer ledit élément à ladite ligne de transmission électrique.

14. Ligne de transmission électrique comprenant : un câble conducteur électrique ayant au moins un élément pour fondre la neige entourant une périphérie extérieure dudit câble, dans laquelle :

l'élément pour fondre la neige est formé selon une configuration annulaire, tubulaire ou hélicoïdale et est composé d'au moins l'un de métaux ou d'oxydes métalliques, de manière à avoir des dimensions et des propriétés électromagnétiques définies par les formules (1) et (2), dans lesquelles :

$$(1) \qquad H_x \, B_H \geqq 40\,000$$

$$(2) \qquad 0,7 \leqq t_0 \, (B_H/\rho \cdot H)^{1/2} \leqq 7$$

dans les formules :

H est égal à 0,4($i/d_0$) et représente l'intensité de champ magnétique en Oersted [Oe] d'un champ magnétique créé par un courant électrique passant dans ladite ligne de transmission électrique, la où il coïncide avec ledit élément pour fondre la neige ;

i représente un courant électrique passant dans ladite ligne de transmission électrique, en ampères ;

$d_0$ représente le diamètre intérieur de l'élément pour fondre la neige, en centimètres ;

$B_H$ représente la densité de flux, en Gauss, induite dans l'élément pour fondre la neige lorsqu'un champ magnétique d'intensité H[Oe] est appliqué à l'élément pour fondre la neige par un courant passant dans ladite ligne de transmission électrique ;

$\rho$ représente la résistivité électrique de l'élément pour fondre la neige, en micro-ohms centimètre ; et

$t_0$ représente la plus petite valeur choisie parmi la longueur axiale dudit élément pour fondre la neige et son épaisseur, pour un élément pour fondre la neige de type annulaire et tubulaire ; et représente la plus petit diamètre d'une section transversale d'un fil formant un élément pour fondre la neige de type hélicoïdal.

15. Ligne de transmission électrique selon la revendication 14, dans laquelle l'élément pour fondre la neige a une configuration annulaire ou tubulaire et est muni, dans la direction de sa circonférence, d'au moins un joint pour fixer ledit élément à ladite ligne de transmission électrique.

16. Ligne de transmission électrique selon la revendication 14, dans laquelle ledit élément pour fondre la neige est hélicoïdal, et l'angle d'hélice est compris entre environ 3 degrés et environ 30 degrés.

17. Ligne de transmission électrique selon la revendication 14, dans lequel ledit élément pour fondre la neige est composé d'un alliage du système Fe-A1 contenant de 1 à 15% en poids d'aluminium, et le pourcentage restant étant composé de fer et d'impuretés inévitables.

18. Ligne de transmission électrique selon la revendication 17, dans lequel l'élément pour fondre la neige est un fil et est enroulé selon une configuration hélicoïdale autour de ladite ligne de transmission électrique.

19. Ligne de transmission électrique selon la revendication 17, dans lequel l'élément pour fondre la neige est un élément annulaire ou tubulaire.

FIG. 1

FIG. 2A

FIG. 2B

FIG. 3

FIG. 4

$\frac{3}{\downarrow}$

-12

FIG. 5